# EUROPÄISCHE PATENTANMELDUNG

(11) **EP 1 157 909 A2**
(43) Veröffentlichungstag der Anmeldung: **28.11.2001**
(21) Anmeldenummer: 01111508.6
(22) Anmeldetag: 11.05.2001
(51) Int. Cl.: B60T 8/00

(54) **Reibwertdisplay und Verfahren zum Darstellen von Reibwerten**

(30) Priorität: 25.05.2000 DE 10026031
(71) Anmelder: Bayerische Motoren Werke Aktiengesellschaft, 80809 München (DE)
(72) Erfinder: Unterforsthuber, Jakob, 82216 Maisach (DE); Foag, Werner, Dr., 80935 München (DE)

(57) **Zusammenfassung**

Die vorliegende Erfindung betrifft eine Einrichtung und ein Verfahren zum Erfassen und Darstellen eines zwischen mindestens einem Rad eines Fahrzeugs und einem Untergrund vorhanden Reibwertes. Dazu wird der Reibwert direkt oder indirekt erfaßt, einer Steuerungseinrichtung zugeführt und in einer Anzeige dargestellt. Die Steuerungseinrichtung und die Anzeige sind dabei derart ausgebildet, daß eine Reibwerthistorie angezeigt werden kann. Dies hat den Vorteil, daß auch kurze Fahrbahnabschnitte mit niedrigem Reibwert mit der gleichen Wertigkeit angezeigt werden wie ein permanent niedriger Reibwert. Zudem hat der Fahrer einen Überblick über einen längeren Zeitraum und kann die Informationen mit einem kurzen Blick auf das Display erfassen.

## Beschreibung

Die vorliegende Erfindung betrifft eine Einrichtung und ein Verfahren zum Erfassen und Darstellen eines zwischen mindestens einem Rad eines Fahrzeugs und einem Untergrund vorhandenen Reibwertes.

Die DE-A-44 14 657 betrifft ein Verfahren zur Ermittlung einer kritischen Fahrgeschwindigkeit eines Kraftfahrzeugs, bei dem momentane Sichtweitewerte erfaßt und zur Beurteilung der Gefahrenträchtigkeit der Fahrsituation verwendet werden. Dazu werden in Abhängigkeit des momentanen Fahrbahnzustandes Werte für einen vorherrschenden Reibwert zwischen der Fahrbahn und mindestens einem Rad ermittelt und in einem weiteren Verfahrensschritt mindestens in Abhängigkeit der momentanen Sichtweite und der Werte für den vorherrschenden Reibwert die kritische Fahrgeschwindigkeit ermittelt und zur Anzeige gebracht. Die kritische Fahrgeschwindigkeit wird beispielsweise mittels einer Skala angezeigt, die bei abnehmender Sichtweite, abnehmendem Abstand und/oder geringerwerdenden Reibwerten von hohen zu niedrigen Geschwindigkeiten anwächst. Eine weitere Möglichkeit zur Warnanzeige besteht darin, bei Überschreitung der kritischen Fahrgeschwindigkeit eine Anzeige zu aktivieren.

Die EP-B-0 756 978 betrifft eine Vorrichtung zur Visualisierung des aktiven Zustands eines Bremsregelsystems in Kraftfahrzeugen. Es ist dazu eine Anzeige im sichtbaren Bereich des Fahrers zur Information über eine momentane Wirkung einer Bremsanlage vorgesehen. Dabei ist als Anzeige eine vergleichende Anzeige einer der momentan maximal möglichen Bremskraft proportionalen Größe mit einer der tatsächlichen Bremskraft proportionalen Größe vorgesehen. Die momentan maximal mögliche Bremskraft liegt unterhalb einer absolut maximal möglichen Bremskraft und kann diese nur bei optimalen Reibwerten erreichen.

Der vorliegenden Erfindung liegt die Aufgabe zugrunde, eine verbesserte Einrichtung und ein verbessertes Verfahren zum Erfassen und Darstellen eines zwischen mindestens einem Rad eines Fahrzeugs und einem Untergrund vorhandenen Reibwerts zur Verfügung zu stellen. Dabei sollen insbesondere die aus dem Stand der Technik bekannten Mängel vermieden werden. Diese Aufgabe wird mit den Merkmalen der Patentansprüche gelöst.

Die Erfindung geht dabei von dem Grundgedanken aus, daß dem Fahrer die Reibwertinformation über einen längeren Zeitraum zur Verfügung gestellt wird. Dies kann z.B. durch ein Display geschehen, das aus mehreren, in einer Reihe angeordneten Elementen besteht. Jedes Element steht für den niedrigsten Reibwert, der in einem bestimmten Zeitraum aufgetreten ist. Die Elemente können reibwertabhängig verschiedene Farben annehmen. Mit zunehmender Fahrdauer werden immer mehr Elemente aufleuchten. Sobald alle Elemente leuchten, wird das Element mit der ältesten Information gelöscht (Ringpufferprinzip).

In allen Fällen, in denen die Reibverhältnisse eindeutig sind, z.B. bei einer einheitlichen Schneedecke oder gut sichtbarer Eisbildung, ist der Fahrer von sich aus in der Lage, das Gefahrenpotential abzuschätzen. Die Reibwertinformation ist deshalb vor allem bei unklaren Verhältnissen besonders wertvoll. Zu solchen Verhältnissen gehört beispielsweise Glatteisbildung, die nicht als solche erkennbar ist (z.B. Reifglätte), oder die nur auf kurzen Streckenabschnitten auftretende Eisbildung (z.B. auf Brücken, in Waldstücken etc.).

Mit der erfindungsgemäßen Einrichtung ist in erster Linie eine gesteigerte Fahrsicherheit zu erreichen. Insbesondere können erfindungsgemäß auch kurze Fahrbahnabschnitte mit niedrigem Reibwert mit der gleichen Wertigkeit angezeigt werden, wie ein permanent niedriger Reibwert. Damit wird vermieden, daß lediglich eine Erfassung und Anzeige der aktuellen Reibwerte nur im Moment des Überfahrens erfolgt, so daß auch das kurze Auftreten von Eisflecken effektiv erkannt werden kann. Dazu muß der Fahrer die Anzeige auch nicht über einen längeren Zeitraum beobachten, da ihm ein Überblick über die Reibwertsituation, d.h. den Zustand der Fahrbahn über einen längeren Zeitraum gegeben wird. Diese umfangreiche Information ist mit einem kurzen Blick auf die Anzeige bzw. das Display erfaßbar, so daß die Signalwirkung sehr intensiv ist. Dadurch behält der Fahrer die volle Aufmerksamkeit und Konzentration für die Fahrzeugführung, da er nicht durch eine ständig zu beobachtende Anzeige abgelenkt wird.

Die vorliegende Erfindung wird nachstehend unter Bezugnahme auf die Zeichnungen anhand einer bevorzugten Ausführungsform beispielhaft beschrieben. Es zeigen:
- Figur 1: eine schematische Darstellung der erfindungsgemäßen Einrichtung zum Erfassen und Darstellen des Reibwertes; und
- Figur 2(a) bis (f): eine schematische Darstellung der Anzeige zu verschiedenen Zeitpunkten.

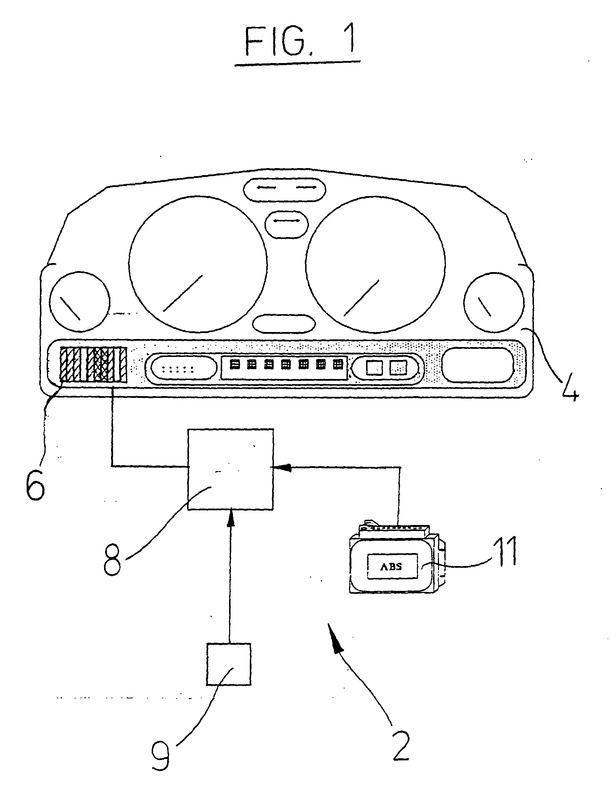

Die in Figur 1 gezeigte schematische Darstellung der erfindungsgemäßen Einrichtung zeigt die wesentlichen Komponenten davon. Die Einrichtung 2 weist im wesentlichen ein im Armaturenbrett eines Fahrzeugs vorgesehenes Kombiinstrument 4 mit einer Anzeigeeinrichtung 6 auf, die von einer Steuerungseinrichtung 8 angesteuert wird. Die Steuerungseinrichtung 8 ist beispielsweise ein Steuergerät eines ABS-Bremsregelsystems. Die Steuerungseinrichtung 8_erhält verschiedene Eingangssignale 10, wie z.B. die Fahrzeuggeschwindigkeit, ein Leistungsanforderungssignal und/oder die Drehzahl sämtlicher Räder des Kraftfahrzeugs. Mit Hilfe dieser Eingangssignale 10 kann die Steuerungseinrichtung 8 den jeweiligen aktuellen Reibwert zwischen mindestens einem Rad des Fahrzeugs und dem Untergrund ermitteln. Neben der vorstehend beschriebenen Ausführungsform, in der die Steuerungseinrichtung 8 das Steuergerät eines ABS-Bremsregelsystems ist, ist auch jeder andere zusätzliche oder bereits vorhandene Detektor zum direkten oder indirekten Erfassen des Reibwerts im Rahmen der vorliegenden Erfindung einsetzbar. Insbesondere kann ein System zum Einsatz kommen, wie es in der Zeitschrift "Elektronik", 2/2000, S. 26 beschrieben ist.

Die im Kombiinstrument 4 vorgesehene Anzeigeeinrichtung 6 dient zum Darstellen der von der Steuerungseinrichtung 8 ermittelten Reibwerte. Die Anzeigeeinrichtung 6 kann jegliche Form annehmen, wobei mit der Anzeige erfindungsgemäß eine Reibwerthistorie darstellbar ist. Zu diesem Zweck ist die Anzeige 6 vorzugsweise in mehrere Abschnitte 12 aufgeteilt, die benachbart zueinander angeordnet sind. Jeder dieser Abschnitte 12 ist einem vorbestimmten Zeit- oder Wegintervall zugeordnet, was nachstehend genauer beschrieben wird. In der bevorzugten Ausführungsform sind die einzelnen Abschnitte 12 derart ausgebildet, daß sie eine Signalisierung verschiedener Reibwerte in verschiedenen Farben und/oder Intensitäten erlauben. So kann beispielsweise ein hoher Reibwert grün, ein mittlerer Reibwert gelb und ein niedriger Reibwert rot dargestellt sein. Zur Realisierung dieser Anzeigemöglichkeiten ist insbesondere eine Flüssigkristallanzeige (LCD-Anzeige) besonders gut geeignet. Die Anzeige läßt sich jedoch auch beispielsweise mit Leuchtdioden oder anderen Leuchtmitteln realisieren. Neben der bevorzugten abgestuften Warnanzeige mit drei Stufen kann auch eine nichtabgestufte Anzeigeeinrichtung (1/0-Anzeige) vorgesehen sein.

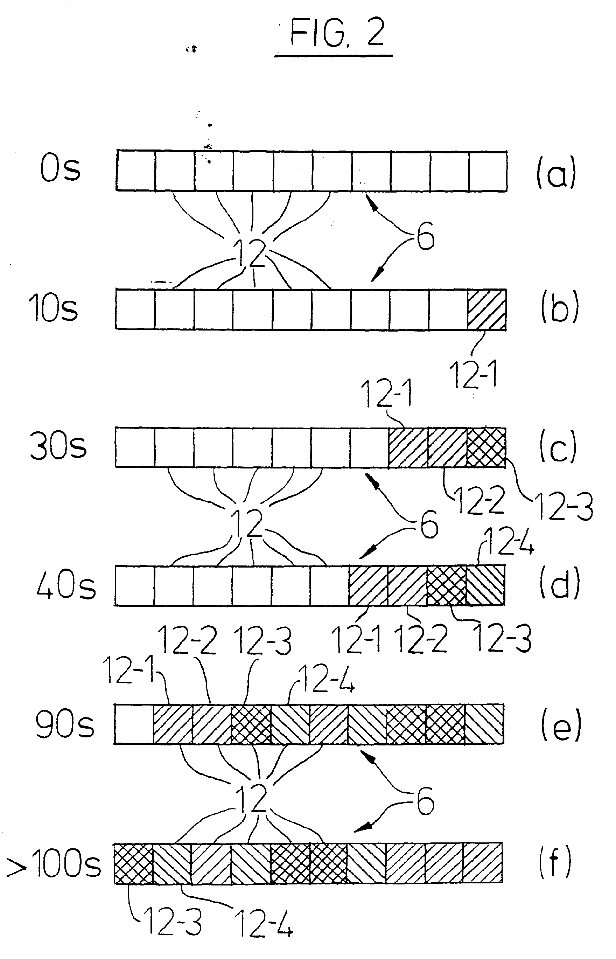

Im folgenden wird unter Bezugnahme auf die Figuren 2(a) bis (f) die Funktionsweise einer derzeit bevorzugten Einrichtung bzw. einem derzeit bevorzugten Verfahren zum Darstellen der Reibwerthistorie beschrieben. Die in Figur 2 dargestellte Anzeige bzw. das Display 6 weist zehn Abschnitte 12 auf, die auch als Elemente oder Felder bezeichnet werden. Die einzelnen Abschnitte 12 sind vorzugsweise neben- oder übereinander angeordnet. Figur 2(a) stellt das Display 6 unmittelbar nach dem Start des Fahrzeugs, d.h. zum Zeitpunkt t = 0 s dar. In Figur 2(b) ist dieselbe Anzeige 6 zum Zeitpunkt t = 10 s, d.h. nach Verstreichen des ersten Zeitintervalls, dargestellt. Während diesem ersten Zeitintervall von 10 s wurde fortlaufend der Reibwert an mindestens einem Rad detektiert und am Ende des Intervalls entsprechend dem kleinsten auftretenden Reibwert kategorisiert bzw. klassifiziert und auf dem Display im ersten Abschnitt 12-1 dargestellt. Alternativ können die Reibwerte an allen Rädern detektiert werden und vorzugsweise der kleinste während eines Zeitintervalls an einem Rad auftretende Reibwert zur Anzeige gebracht werden. Entsprechend der Höhe des Reibwerts erfolgt die Darstellung in einer vorbestimmten Farbe. In Figur 2 ist diese Farbe in Form eines Musters wiedergegeben. Die in Figur 2(b) dargestellte Schraffur im Abschnitt 12-1 ist beispielsweise einem mittleren Reibwert zugeordnet, während die nichtschraffierten Abschnitte einem hohen Reibwert entsprechen. Ein niedriger Reibwert ist in den Figuren als Doppelschraffur dargestellt und entspricht in der reellen Ausführungsform beispielsweise einer bestimmten Farbe. Der in Figur 2(b) im Abschnitt 12-1 dargestellte mittlere Reibwert wird nach weiteren 10 Sekunden, d.h. nach Verstreichen des zweiten Zeitintervalls, im nächsten Abschnitt links neben dem Abschnitt 12-1 dargestellt (nicht gezeigt). In Figur 2(c) ist die Anzeige 6 zum Zeitpunkt t = 30 s (drittes Zeitintervall) nach dem Startvorgang gezeigt. Der Abschnitt 12-1 aus Figur 2(b) ist in Figur 2(c) um 2 Felder nach links gewandert, während aktuellere Reibwerte in den Abschnitten 12-2 und 12-3 angezeigt werden. Der in Abschnitt 12-1 gezeigte Reibwert in Figur 2(c) stammt aus dem ersten Zeitintervall und ist zwischen 20 s und 30 s alt. Der im Abschnitt 12-2 dargestellte Reibwert stammt aus dem zweiten Zeitintervall zwischen 10 s < t ≤ 20 s. Auch dieser Reibwert entspricht, wie der im Abschnitt 12-1 dargestellte, einem mittleren Reibwert, d.h. vorzugsweise der Farbe gelb. Der im Abschnitt 12-3 gezeigte Reibwert in Figur 2(c) stammt aus dem jüngsten, dritten Zeitintervall zwischen 0 s und 10 s alt und entspricht einem niedrigen Reibwert, d.h. bevorzugt wird dieser als rot in der Anzeige 6 dargestellt.

Zum Zeitpunkt t = 40 s wandern die Abschnitte 12-1, 12-2 und 12-3 wiederum um eine Stelle nach links, so daß ein neuer Abschnitt 12-4 in der Anzeige 6 entsprechend der Darstellung in Figur 2(d) erkennbar wird. Der Abschnitt 12-4 entspricht im Ausführungsbeispiel einem hohen Reibwert und hat in der reellen Ausführungsform beispielsweise eine grüne Farbe. In Figur 2(e) ist die erfindungsgemäße Anzeige zum Zeitpunkt t = 90 s dargestellt, so daß sich dort die einzelnen Abschnitte 12-1, 12-2, 12-3 und 12-4 bereits fast am linken Ende der Anzeige 6 befinden. Dies bedeutet, daß weitere, aktuellere Reibwerte im rechten Bereich der Anzeige angezeigt werden. Entsprechend Figur 2(f) verschwindet der erste Abschnitt 12-1 ab t = 100 s aus der Anzeige 6. Zu dem in Figur 2(f) dargestellten Zeitpunkt befindet sich bereits der Abschnitt 12-3 am linken Ende der Anzeige 6 und wandert nach weiteren 10 s aus dem Anzeigefeld heraus.

Die erfindungsgemäße Einrichtung bzw. das erfindungsgemäße Verfahren stellt also entsprechend der bevorzugten Ausführungsform der Erfindung eine Reibwerthistorie in der Form dar, daß jeweils nach einem bestimmten Zeitintervall die einem bestimmten Reibwert entsprechende Anzeige weiter in Richtung Ende des Anzeigefelds wandert. Auf der dem Ende des Anzeigefelds gegenüberliegenden Seite werden dementsprechend immer aktuelle Informationen über den Reibwert angezeigt.

Auf diese Weise bekommt der Fahrer die Information über die Reibwerthistorie, die im gezielt ermöglicht, seine Fahrweise entsprechend anzupassen, ohne daß er längere Zeit auf die Anzeige 6 blicken muß. Er sieht also sofort, ob auf der innerhalb der letzten 100 s zurückgelegten Wegstrecke eine oder mehrere Stellen mit niedrigen, mittleren und hohen Reibwerten vorhanden waren. Er ist nicht damit beschäftigt, konzentriert das Anzeigeinstrument zu beobachten, sondern kann sich die Information zu einem für ihn günstigen Zeitpunkt mit einem kurzen Blick auf die Anzeige 6 beschaffen.

Selbstverständlich können im Rahmen der vorliegenden Erfindung statt der gewählten Parameter für Zeit, Farbe, Anzahl der Abschnitte und Layout auch andere Werte verwendet werden. Z.B. könnte anstelle der Zeit auch eine bestimmte Wegstrecke die Basis für eine Feldinformation darstellen. Darüber hinaus ist auch denkbar, die Gültigkeitsdauer für weiter zurückliegende oder ältere Abschnitte länger zu wählen als die für aktuellere bzw. neuere Elemente, so daß sich eine höhere Zeitauflösung für die jüngere Reibwertgeschichte bei gleichzeitig verbesserter Langzeitübersicht ergibt. Beispielsweise könnte für das jüngste Element bzw. den jüngsten Abschnitt ein Zeitintervall von t = 5 s, für ein mittleres Element ein Zeitabschnitt von t = 15 s und für ein ältestes Element ein Zeitabschnitt von t = 1 min vorgesehen sein.

Die in der erfindungsgemäßen Einrichtung vorgesehene Steuereinrichtung und/oder die Anzeige kann auch für verschiedenartig einstellbare Darstellungen der Reibwertgeschichte ausgelegt sein. Somit hätte der Fahrer die Möglichkeit, eine ihm besonders vorteilhafte Darstellungsform auszuwählen.

## Patentansprüche

1. Einrichtung (2) zum Erfassen und Darstellen eines zwischen mindestens einem Rad eines Fahrzeugs und einem Untergrund vorhandenen Reibwertes mit:
a) einem Detektor zum direkten oder indirekten Erfassen des Reibwertes;
b) einer Steuerungseinrichtung (8); und
c) einer Anzeige (6);
wobei die Steuerungseinrichtung (8) und die Anzeige (6) derart ausgebildet sind, daß eine Reibwerthistorie darstellbar ist, die den in einem Beobachtungsintervall auftretenden kleinsten Reibwerten entspricht.

2. Einrichtung (2) nach Anspruch 1, wobei die Reibwerte an allen Rädern detektiert werden und der kleinste während eines Beobachtungsintervalls an einem Rad auftretende Reibwert darstellbar ist.

3. Einrichtung (2) nach Anspruch 1 oder 2, wobei der Detektor und die Steuerungseinrichtung (8) in Form eines Anti-Blockier-Systems mit Steuergerät ausgeführt ist.

4. Einrichtung (2) nach einem der Ansprüche 1 bis 3, wobei die Anzeige (6) mehrere Abschnitte (12-i) aufweist, die benachbart zueinander angeordnet sind.

5. Einrichtung (2) nach Anspruch 4, wobei jeder Abschnitt (12-i) der Anzeige (6) einem bestimmten Zeit- und/oder Wegintervall zugeordnet ist.

6. Einrichtung (2) nach Anspruch 5, wobei jeder Abschnitt (12-i) der Anzeige (6) einem Zeit- und/oder Wegintervall gleicher Größe zugeordnet ist.

7. Einrichtung (2) nach Anspruch 5, wobei weiter zurückliegende Zeit- und/oder Wegintervalle größer sind als aktuellere Zeit- und/oder Wegintervalle, um eine höhere Zeitauflösung für die aktuelleren Zeit- und/oder Wegintervalle zu erhalten.

8. Einrichtung (2) nach einem der Ansprüche 5 bis 7, wobei ein Zeitintervall etwa zwischen 5 s und 15 s, vorzugsweise etwa 10 s beträgt.

9. Einrichtung (2) nach einem der Ansprüche 5 bis 8, wobei ein Wegintervall etwa zwischen 25 m und 700 m, vorzugsweise zwischen 100 m und 400 m und besonders bevorzugt etwa 200 m beträgt.

10. Einrichtung (2) nach einem der Ansprüche 1 bis 9, wobei der Reibwert entsprechend seinem Betrag klassifiziert darstellbar ist.

11. Einrichtung (2) nach Anspruch 10, wobei die klassifizierte Darstellung des Reibwerts als verschiedene Farben in den einzelnen Abschnitten (12-i) der Anzeige (6) darstellbar ist.

12. Einrichtung (2) nach Anspruch 10 oder 11, wobei der Reibwert in drei verschiedenen Klassen anzeigbar ist.

13. Einrichtung (2) nach einem der Ansprüche 1 bis 12, wobei die Anzeige (6) ein Flüssigkkristalldisplay oder ein Leuchtdiodenarray ist.

14. Einrichtung (2) nach einem der Ansprüche 1 bis 13, wobei die Anzeige (6) in einem Armaturenbrett eines Fahrzeugs vorgesehen ist.

15. Verfahren zum Erfassen und Darstellen eines zwischen mindestens einem Rad eines Fahrzeugs und einem Untergrund vorhandenen Reibwertes mit den Schritten:
a) direktes oder indirektes Erfassen des Reibwertes;
b) Erzeugen eines dem Reibwert entsprechenden Reibwertsignals; und
c) Anzeigen einer Reibwerthistorie, die den in einem Beobachtungsintervall auftretenden kleinsten Reibwerten entspricht.

16. Verfahren nach Anspruch 15, wobei die Reibwerte an allen Rädern detektiert werden und der kleinste während eines Beobachtungsintervalls an einem Rad auftretende Reibwert dargestellt wird.

17. Verfahren nach Anspruch 15 oder 16, wobei der Reibwert mittels eines Anti-Blockier-Systems mit Steuergerät erfaßt wird.

18. Verfahren nach einem der Ansprüche 15 bis 17, wobei die Reibwerthistorie auf mehreren Abschnitten (12-i) der Anzeige (6) angezeigt wird, wobei die Abschnitte (12-i) benachbart zueinander angeordnet sind.

19. Verfahren nach Anspruch 18, wobei jeder Abschnitt (12-i) der Anzeige (6) einem bestimmten Zeit- und/oder Wegintervall zugeordnet wird.

20. Verfahren nach Anspruch 19. wobei jeder Abschnitt (12-i) der Anzeige (6) einem Zeit- und/oder Wegintervall gleicher Länge zugeordnet wird.

21. Verfahren nach Anspruch 19, wobei weiter zurückliegende Zeit- und/oder Wegintervalle größer definiert werden als aktuellere Zeit- und/oder Wegintervalle, um eine höhere Zeitauflösung für die aktuelleren Zeit- und/oder Wegintervalle zu erhalten.

22. Verfahren nach einem der Ansprüche 19 bis 21, wobei ein Zeitintervall etwa zwischen 5 Sekunden und 15 Sekunden, vorzugsweise etwa 10 Sekunden beträgt.

23. Verfahren nach einem der Ansprüche 19 bis 22, wobei ein Wegintervall etwa zwischen 25 m und 700 m, vorzugsweise zwischen 100 m und 400 m und besonders bevorzugt etwa 200 m beträgt.

24. Verfahren nach einem der Ansprüche 15 bis 23, wobei der Reibwert entsprechend seinem Betrag klassifiziert dargestellt wird.

25. Verfahren nach Anspruch 24, wobei die klassifizierte Darstellung des Reibwertes als verschiedene Farben in der Anzeige (6) dargestellt wird.

26. Verfahren nach Anspruch 24 oder 25, wobei der Reibwert in drei verschiedenen Klassen angezeigt wird.

27. Verfahren nach einem der Ansprüche 15 bis 26, wobei die Anzeige (6) auf einem Flüssigkristalldisplay oder einem Leuchtdiodenarray erfolgt.
